# NEW EUROPEAN PATENT SPECIFICATION

(11) **EP 2 904 252 B2**
(45) Date of publication and mention of the opposition decision: **25.11.2020**
(45) Mention of the grant of the patent: 06.12.2017
(21) Application number: 13843942.7
(22) Date of filing: 04.03.2013
(51) Int. Cl.: F01D 5/14, F02K 3/00, F02K 99/00, F02C 7/00, F02C 3/00

(54) **STATIC GUIDE VANE WITH INTERNAL HOLLOW CHANNELS**
STATISCHE LEITSCHAUFEL MIT INTERNEN HOHLEN KANÄLEN
AUBE DIRECTRICE STATIQUE À CANAUX INTERNES CREUX

(30) Priority: 01.10.2012 US 201261708109 P
(43) Date of publication of application: 12.08.2015
(73) Proprietor: United Technologies Corporation, Farmington, CT 06032 (US)
(72) Inventor: POPE, Andrew, Glendale, New York 11385 (US); YUDICHAK, David, J., Tolland, Connecticut 06084 (US); LUCASHU, John, P., Durham, Connecticut 06422 (US); REINHARDT, Gregory, E., South Glastonbury, Connecticut 06073 (US); DITOMASSO, John, C., Glastonbury, Connecticut 06033 (US); CONNER, Steven, L., Avon, Connecticut 06001 (US); KLINETOB, Carl, Brian, Zionsville, PA 18092 (US); LEROUX, Jason, Kensington, Connecticut 06037 (US)
(74) Representative: Dehns
(86) International application number: PCT/US2013/028787
(87) International publication number: WO 2014/055110

(56) References cited:
- EP-A1- 0 596 036
- EP-A1- 1 596 036
- EP-A1- 2 900 934
- EP-A2- 0 899 427
- EP-A2- 0 926 312
- EP-A2- 2 362 066
- EP-A2- 2 383 437
- US-A- 5 439 354
- US-A1- 2006 067 821
- US-A1- 2008 014 095
- US-B2- 7 033 131

## Description

### BACKGROUND OF THE INVENTION

This application relates to a static guide vane which is provided with hollow channels to reduce weight.

Gas turbine engines typically include a fan delivering air into a compressor. The air is compressed and passed into a combustor section where it is mixed with fuel and ignited. Products of the combustion pass downstream over turbine rotors, driving them to rotate. The turbine rotors, in turn, drive compressor and fan rotors.

Traditionally, a low pressure turbine would drive a low pressure compressor and the fan as one spool. Thus, all three components rotated at a common speed. More recently, it has been proposed to include a gear reduction between the fan and the low pressure turbine. With the use of the gear reduction, the fan can rotate at a slower speed than the low pressure turbine or the low pressure compressor.

As fan speed has decreased, the diameter of the fan could be increased. The fan typically also delivers air into a bypass duct where it becomes propulsion for an aircraft receiving the gas turbine engine. As the fan diameter has increased, so has the amount of bypass air.

With the movement to larger fans, guide vanes which are positioned downstream of the fan rotor have become structural components. As the guide vanes have become structural components and have become larger, their weight has become undesirably large.

EP 1596036 discloses a prior art static guide vane in accordance with the precharacterising portion of claim 1.

### SUMMARY OF THE INVENTION

According to the invention, there is provided a static guide vane as set forth in claim 1.

In another embodiment according to any of the previous embodiments, there are ribs intermediate the plurality of channels.

In another embodiment according to any of the previous embodiments, the ribs and portions of a recess between the channels and the trailing and leading edges together form a planar surface for supporting the cover.

In another embodiment according to any of the previous embodiments, there are a plurality of channels extending in a generally radial direction from the inner platform toward the outer platform, and spaced from a leading edge of the airfoil towards a trailing edge of the airfoil. The channels extend for a greater width, with the width defined between the leading and trailing edges, as the channels approach the trailing edge. There are ribs intermediate the plurality of channels. Portions of a recess between the channels and the trailing and leading edges together form a planar surface for supporting the cover.

The invention also extends to a fan section as set forth in claim 4.

The invention also extends to a gas turbine engine as set forth in claim 5.

These and other features may be best understood from the following drawings and specification.

### BRIEF DESCRIPTION OF THE DRAWINGS

Figure 1 schematically shows a gas turbine engine.
Figure 2 shows details of a fan guide vane.
Figure 3 is a cross-sectional view through the Figure 2 guide vane.

### DETAILED DESCRIPTION

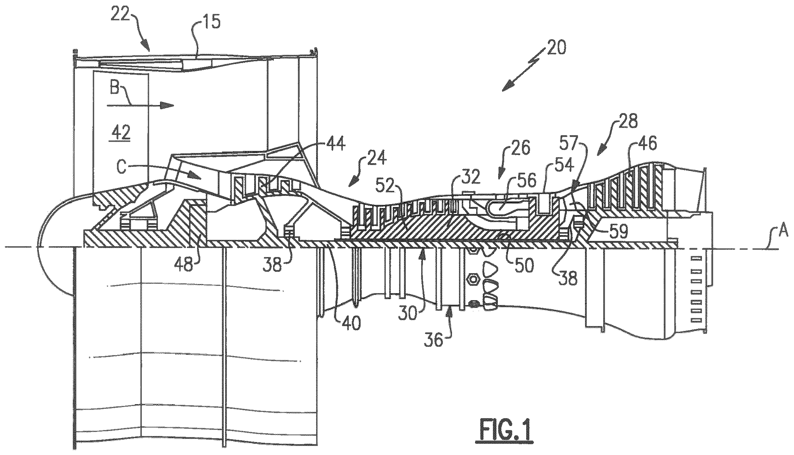

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about five (5). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second.

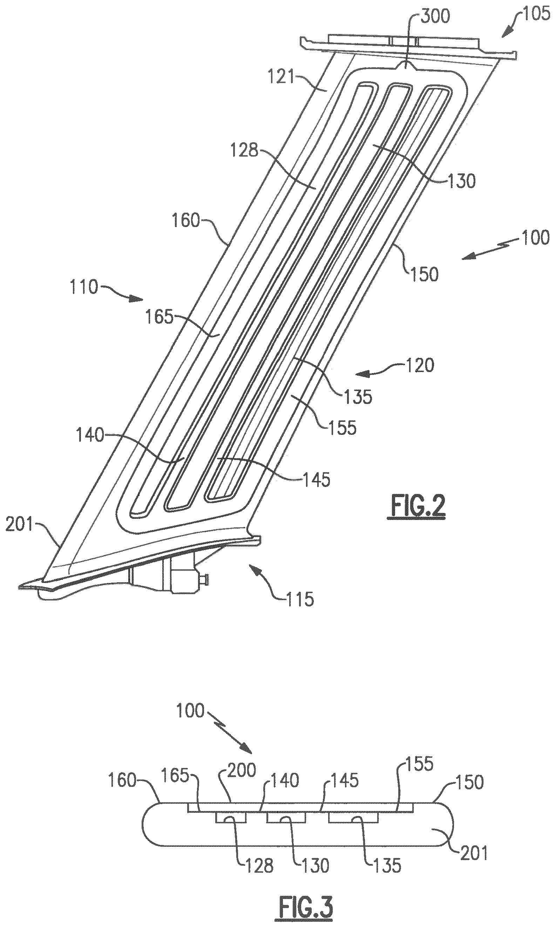

Figure 2 shows a static guide vane 100, which is positioned downstream of a fan rotor, such as fan rotor 42 as shown in Figure 1. An outer platform mount 105 is connected by an airfoil 110 to an inner platform mount 115. The static guide vane 100 has a leading edge 160 and a trailing edge 150. There is a recess 165/155 cut into an outer surface of the blade and which provides a surface to receive a cover 200, as shown in Figure 3. The cover 200 may be secured such as by adhesive to a main body 201 of the vane 100.

As can be appreciated from Figures 2 and 3, there are three channels 128, 130 and 135 spaced in a direction from the leading edge 160 toward the trailing edge 150. There are also intermediate ribs 140 and 145 intermediate the channels. An outer surface of ribs 140 and 145 define a parallel plane with surfaces 165 and 155 of the recess to support the cover 200.

As can be appreciated from Figure 3, the width of the channels 128, 130, 135 defined in a direction from the leading edge 160 toward the trailing edge 150 increases as the channels approach the trailing edge 150.

The ribs will provide structural support to the vane 100 while the channels 128, 130 and 135 reduce the overall weight.

As shown, a "fool-proofing" notch 300 will ensure that the cover 200 which is mounted on a static guide vane 100 will be an appropriate cover. There are a number of distinct static guide vane classes, and each have an appropriate, and different, cover. By positioning the feature 300 at distinct locations, one can be assured that the proper cover 200 is mounted on each static guide vane 100.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A static guide vane (100) for a gas turbine engine (20) comprising:
an outer platform (105) and an inner platform (115), said inner and outer platforms (105, 115) connected by an airfoil (110); and
said airfoil (110) having channels (128, 130, 135) extending into a main body (201) of said airfoil (110) and a cover (200) closing off said channels (128, 130, 135) with said cover (200) providing a portion of said airfoil (110), wherein there are a plurality of said channels (128, 130, 135) extending in a generally radial direction from said inner platform (115) toward said outer platform (105), and spaced from a leading edge (160) of said airfoil (110) towards a trailing edge (150) of said airfoil (110);
**characterised in that**:
said channels (128, 130, 135) extend for a greater width, with the width defined between the leading and trailing edges (160, 150), as the channels (128, 130, 135) approach the trailing edge (150); and
a notch (300) ensures that said cover (200) is an appropriate cover for the particular static guide vane (100).

2. The static guide vane (100) as set forth in claim 1, wherein there are ribs (140, 145) intermediate said plurality of channels (128, 130, 135).

3. The static guide vane (100) as set forth in claim 2, wherein said ribs (140, 145), and portions of a recess (155, 165) between said channels (128, 130, 135) and said trailing and leading edges (150, 160) together form a planar surface for supporting said cover (200).

4. A fan section (22) for use in a gas turbine engine (20) comprising:
a fan rotor; and
a static guide vane (100) as set forth in any preceding claim.

5. A gas turbine engine (20) comprising:
a fan section (22) and a compressor section (24), with said fan section (22) including a fan rotor; and
a row of static guide vanes (100), the static guide vanes (100) being static guide vanes (100) as set forth in any of claims 1 to 3.

6. The gas turbine engine of claim 5, further comprising a low speed spool (30) comprising a shaft (40) interconnecting the fan section (22), a low pressure compressor (44) of said compressor section (24) and a low pressure turbine (46), the shaft (40) connected to the fan section through a geared architecture (48) to drive the fan section at a lower speed

## Patentansprüche

1. Statische Leitschaufel (100) für ein Gasturbinentriebwerk (20), umfassend:
eine äußere Plattform (105) und eine innere Plattform (115), wobei die innere und äußere Plattform (105, 115) durch ein Schaufelblatt (110) verbunden sind; und
wobei das Schaufelblatt (110) Kanäle (128, 130, 135), die sich in einen Hauptkörper (201) des Schaufelblatts (110) erstrecken, und eine Abdeckung (200) aufweist, die die Kanäle (128, 130, 135) verschließt, wobei die Abdeckung (200) einen Abschnitt des Schaufelblatts (110) bereitstellt, wobei eine Vielzahl der Kanäle (128, 130, 135) vorliegt, die sich in eine allgemein radiale Richtung von der inneren Plattform (115) zur äußeren Plattform (105) erstreckt und von einer Vorderkante (160) des Schaufelblatts (110) zu einer Hinterkante (150) des Schaufelblatts (110) beabstandet ist;
**dadurch gekennzeichnet, dass**:
die Kanäle (128, 130, 135) sich über eine größere Breite erstrecken, wobei die Breite zwischen der Vorder- und Hinterkante (160, 150) definiert ist, wenn sich die Kanäle (128, 130, 135) der Hinterkante (150) annähern; und
ein Kerbe (300) sicherstellt, dass die Abdeckung (200) eine geeignete Abdeckung für die jeweilige statische Leitschaufel (100) ist.

2. Statische Leitschaufel (100) nach Anspruch 1, wobei Rippen (140, 145) zwischen der Vielzahl von Kanälen (128, 130, 135) vorliegen.

3. Statische Leitschaufel (100) nach Anspruch 2, wobei die Rippen (140, 145) und Abschnitte einer Vertiefung (155, 165) zwischen den Kanälen (128, 130, 135) und der Hinter- und Vorderkante (150, 160) gemeinsam eine ebene Fläche zum Tragen der Abdeckung (200) bilden.

4. Gebläseabschnitt (22) zur Verwendung in einem Gasturbinentriebwerk (20), umfassend:
einen Gebläserotor; und
eine statische Leitschaufel (100) nach einem der vorangehenden Ansprüche.

5. Gasturbinentriebwerk (20), umfassend:
einen Gebläseabschnitt (22) und einen Verdichterabschnitt (24), wobei der Gebläseabschnitt (22) einen Gebläserotor aufweist; und
eine Reihe statischer Leitschaufeln (100), wobei die statischen Leitschaufeln (100) statische Leitschaufeln (100) nach einem der Ansprüche 1 bis 3 sind.

6. Gasturbinentriebwerk nach Anspruch 5, ferner umfassend eine Triebwerkswelle geringer Drehzahl (30), umfassend eine Welle (40), die den Gebläseabschnitt (22), einen Niederdruckverdichter (44) des Verdichterabschnitts (24) und eine Niederdruckturbine (46) miteinander verbindet, wobei die Welle (40) durch eine Zahnradarchitektur (48) mit dem Gebläseabschnitt verbunden ist, um den Gebläseabschnitt bei einer geringeren Drehzahl anzutreiben.

## Revendications

1. Aube directrice statique (100) pour un moteur à turbine à gaz (20) comprenant :
une plateforme externe (105) et une plateforme interne (115), lesdites plateformes interne et externe (105, 115) étant raccordées par un profil aérodynamique (110) ; et
ledit profil aérodynamique (110) comprenant des canaux (128, 130, 135) s'étendant dans un corps principal (201) dudit profil aérodynamique (110) et un couvercle (200) fermant lesdits canaux (128, 130, 135) avec ledit couvercle (200) constituant une partie dudit profil aérodynamique (110), dans laquelle une pluralité desdits canaux (128, 130, 135) s'étend dans une direction généralement radiale à partir de ladite plateforme interne (115) en direction de ladite plateforme externe (105) et est espacée d'un bord d'attaque (160) dudit profil aérodynamique (110) en direction d'un bord de fuite (150) dudit profil aérodynamique (110) ;
**caractérisée en ce que** :
lesdits canaux (128, 130, 135) s'étendent sur une largeur plus importante, la largeur étant définie entre les bords d'attaque et de fuite (160, 150), alors que les canaux (128, 130, 135) s'approchent du bord de fuite (150) ; et
une encoche (300) garantit que ledit couvercle (200) est un couvercle approprié pour l'aube directrice statique particulière (100).

2. Aube directrice statique (100) selon la revendication 1, dans laquelle il existe des nervures (140, 145) intermédiaires à ladite pluralité de canaux (128, 130, 135).

3. Aube directrice statique (100) selon la revendication 2, dans laquelle lesdites nervures (140, 145) et des parties d'un évidement (155, 165) entre lesdits canaux (128, 130, 135) et lesdits bords de fuite et d'attaque (150, 160) forment ensemble une surface plane pour supporter ledit couvercle (200).

4. Section de soufflante (22) destinée à être utilisée dans un moteur à turbine à gaz (20) comprenant :
un rotor de soufflante ; et
une aube directrice statique (100) selon une quelconque revendication précédente.

5. Moteur à turbine à gaz (20) comprenant :
une section de soufflante (22) et une section de compresseur (24), ladite section de soufflante (22) comprenant un rotor de soufflante ; et
une rangée d'aubes directrices statiques (100), les aubes directrices statiques (100) étant des aubes directrices statiques (100) selon l'une quelconque des revendications 1 à 3.

6. Moteur à turbine à gaz selon la revendication 5, comprenant en outre une bobine à faible vitesse (30) comprenant un arbre (40) raccordant entre eux la section de soufflante (22), un compresseur à basse pression (44) de ladite section de compresseur (24) et une turbine à basse pression (46), l'arbre (40) étant raccordé à la section de soufflante par le biais d'une architecture à engrenages (48) pour entraîner la section de soufflante à une vitesse inférieure
